# EUROPÄISCHE PATENTSCHRIFT

(11) **EP 2 138 748 B1**
(45) Veröffentlichungstag und Bekanntmachung des Hinweises auf die Patenterteilung: **07.03.2012**
(21) Anmeldenummer: 09008386.6
(22) Anmeldetag: 26.06.2009
(51) Int. Cl.: F16K 11/085, F16K 11/072

(54) **Mehrkanal-Verteilventil**
Multiple channel distribution valve
Soupape de distribution à plusieurs canaux

(30) Priorität: 26.06.2008 DE 102008029968
(43) Veröffentlichungstag der Anmeldung: 30.12.2009
(73) Patentinhaber: Bürkert Werke GmbH, 74653 Ingelfingen (DE)
(72) Erfinder: Lotha, Hartmuth, 74635 Kupferzell (DE)
(74) Vertreter: Prinz & Partner

(56) Entgegenhaltungen:
- EP-A- 1 087 188
- DE-A1- 3 939 523
- US-A1- 2003 196 713
- US-A1- 2008 029 168

## Beschreibung

Die Erfindung betrifft ein Mehrkanal-Verteilventil.

Es ist bekannt, in Systemen Flüssigkeiten mit Hilfe mehrerer Ventile zu verteilen.

Ferner zeigen die US 2008/0029168 A1 und die US 2003/0196713 A1, aus der die Merkmale des Oberbegriffs des Anspruchs 1 benannt sind, Mehrkanal-Verteilventile, welche mehrere Zulauf- und Ablaufanschlüsse und einen drehbaren Ventilkörper aufweisen, wobei der Ventilkörper durch Drehung die Zulaufanschlüsse und Ablaufanschlüsse strömungsmäßig koppelt. Der Ventilkörper hat eine komplexe Geometrie, wodurch die Herstellung des Ventilkörpers aufwendig und teuer ist.

Die Erfindung schafft ein Verteilersystem mittels eines einzigen Geräts, wobei die zu verteilenden Flüssigkeiten zu Verteilerausläufen geleitet werden und eine schrittweise Umschaltung zu jeweils benachbarten Verteilerausläufen erfolgt. Dies wird durch ein Ventil nach Anspruch 1 erreicht.

Die Erfindung betrifft ein Mehrkanal-Verteilventil, mit einem drehbaren Ventilkörper, einem Mehrkanalzulaufsystem mit mehreren Zulaufkanälen, und einem Mehrkanalauslaufsystem mit mehreren Auslaufkanälen. Der Ventilkörper koppelt durch Drehung Zulaufkanäle strömungsmäßig mit Auslaufkanälen. Dies ermöglicht eine kompakte Ausführung und Bauweise des Verteilersystems und Verteilventils, sowie einen einfachen mechanischen Antrieb zur Betätigung des Verteilventils durch eine Drehbewegung. Die Drehung des Ventilkörpers ist insbesondere für periodisch verlaufende Schaltprozesse mit festen Verteilungsmustern des Mehrkanal-Verteilventils von Vorteil. Der Ventilkörper weist einzelne übereinanderliegende scheibenförmige Einheiten auf, und an jeder Einheit mündet ein eigener Zulaufkanal. Ein solches Verteilventil kann sich im Wesentlichen in der axialen Richtung der übereinanderliegenden scheibenförmigen Einheiten erstrecken, wobei jede Einheit mit minimaler radialer Erstreckung ausgebildet sein kann, wodurch die Trägheitsmomente der Einheiten minimiert werden.

Das Ventil besteht im wesentlichen aus drei Einheiten, die vertikal übereinander angeordnet sind: einem Antrieb, einem Mehrkanalzulaufsystem sowie einem Mehrkanalverteilerauslaufsystem. Der Antrieb ist vorzugsweise ein elektromotorischer Drehantrieb. Es kann aber auch ein pneumatisch arbeitender Antrieb eingesetzt werden. Der Antrieb ist mit einer Ansteuerelektronik und optional mit einer Positionsrückmeldung ausgestattet. Der Ventilkörper wird auf bekannte Weise an den Antrieb drehbar angekoppelt.

Der Ventilkörper besteht insbesondere aus einer Anzahl von aufeinander gestapelten Scheiben, die durch Dichtungsebenen voneinander getrennt sind. Die Anzahl der Scheiben ist gleich groß wie die Anzahl der gewünschten vorgesehenen Zulaufkanäle. Von jeder Scheibe ausgehend gibt es einen Durchführungskanal durch alle nachfolgenden Scheiben hindurch endend im Verteilerauslaufsystem. Die Scheiben sind zueinander nicht drehbar. Der Antrieb dreht das komplette Scheibenpaket.

In der Ausgangslage ist also Zulauf A über die Scheibe A und alle nachfolgenden Scheiben mit dem Verteilerauslauf A verbunden, der Zulauf B ausgehend von der Scheibe B und den darauffolgenden Scheiben mit dem Verteilerauslauf B usw.

In Betrieb schaltet das Ventil jeweils um eine Verteilerposition weiter, d.h. der Zulauf A ist dann verbunden mit Verteilerauslauf B und der Zulauf B mit Verteilerauslauf C.

Die Scheiben werden aus einem verschleißarmen Material wie zum Beispiel Keramik gefertigt.

Ein Mehrkanal-Verteilventil eignet sich zum Beispiel für ein Kühlsystem.

Bei Einspeisung von warmem Wasser kann dieses in Stufen heruntergekühlt werden auf eine gewünschte Temperatur.

Vorzugsweise ist jedem Zulaufkanal in den verschiedenen Drehstellungen nur ein Auslaufkanal zugeordnet. Dies ermöglicht eine funktionale Relation und eindeutige Zuordnung von Zulauf- und Auslaufkanälen.

Es ist möglich, dass jedem Zulaufkanal bei Drehen des Ventilkörpers nacheinander jeweils ein singulärer, anderer Auslaufkanal zugeordnet ist. Auf diese Weise sind jedem Zulaufkanal in den verschiedenen Ventilstellungen die Auslaufkanäle eindeutig, insbesondere injektiv, zugeordnet.

In dem Ventilkörper können Durchführungskanäle vorgesehen sein, wobei jedem Zulaufkanal ein Durchführungskanal zugeordnet ist. Dies ermöglicht eine robuste und vorzugsweise kompakte Ausführung des Ventilkörpers.

Vorzugsweise werden zugeordnete Zulauf- und Auslaufkanäle durch Drehen des Ventilkörpers nacheinander miteinander gekoppelt und voneinander entkoppelt.

Beispielsweise weist der Ventilkörper übereinanderliegende Zulauf- und/oder Auslaufkanäle auf. Auf diese Weise können die Zulauf- und/oder Auslaufkanäle auf einer Seite des Mehrkanal-Verteilventils angeordnet sein, wodurch beispielsweise ein einfacher Anschluß des Verteilventils möglich ist.

Die Einheiten können als Einzelteile vorgefertigte, miteinander gekoppelte Scheiben sein. Im Gegensatz zu einem einzelnen, geometrisch und herstellungstechnisch komplexen Ventilkörper können die als Einzelteile gefertigen Einheiten jeweils eine einfache, leicht herzustellende Geometrie aufweisen. Die Koppelung der Einheiten ermöglicht die gleichzeitige Bewegung der einzelnen Scheiben analog zu einem integralen Ventilkörper.

Vorzugsweise ist jeder Einheit ein singulärer Zulaufkanal zugeordnet ist. Durch diese eindeutige Zuordnung wird der Aufbau des Ventilkörpers vereinfacht und klar strukturiert.

Die Einheiten können durch Dichtungen strömungsmäßig voneinander getrennt sein.

Die Einheiten weisen beispielsweise axiale Durchströmöffnungen als Abschnitte der Durchführungskanäle auf. Axiale Durchströmöffnungen ermöglichen die Ausbildung .der Durchführungskanäle in axialer Richtung, insbesondere über mehrere Einheiten hinweg.

Es ist möglich, dass alle Durchströmöffnungen in der "untersten" Einheit enden, an der die Auslaufkanäle ansetzen, so dass jeder Durchströmöffnung ein Auslaufkanal zugeordnet ist, wobei die Durchströmöffnungen beim Drehen des Ventilkörpers nacheinander einem anderen Auslaufkanal zugeordnet werden. Auf diese Weise werden alle Durchführungskanäle gemeinsam zu einer Einheit geführt, wodurch das Mehrkanalverteilerauslaufsystem nur an dieser Einheit angeordnet sein kann. "Unterste Einheit" soll in diesem Zusammenhang eine axial äußere Einheit definieren.

Vorteilhafterweise ist jeder Zulaufkanal permanent und in allen Drehstellungen mit seinem singulären, zugeordneten Durchführungskanal gekoppelt. Die Schaltung eines solchen Mehrkanal-Verteilventils wird ausschließlich über die Koppelung der Durchführungskanäle mit den Auslaufkanälen bestimmt. Die Koppelung der Durchführungskanäle mit den Zulaufkanälen ist unabhängig von der Drehstellung des Ventilkörpers, wodurch bei der Planung der Schaltstellungen auf die Koppelung der Durchführungskanäle mit den Zulaufkanälen nicht geachtet werden muss und sich die Planung entsprechend vereinfacht.

Gemäß einer bevorzugten Ausführungsform erstreckt sich ein Durchführungskanal über mehrere Einheiten des Ventilkörpers. Dies ermöglicht eine besonders flexible Führung der Durchführungskanäle.

Ein Durchführungskanal kann sich über mehrere Einheiten des Ventilkörpers erstrecken.

Vorzugsweise sind die Einheiten alle gleich ausgeführt, wobei jede Einheit mindestens einen Durchführungskanal aufweist, der sich axial durch die gesamte Scheibe hindurch erstreckt, und mindestens einen weiteren, vorzugsweise genau einen weiteren, Durchführungskanal aufweist, der mit einem Zulaufkanal gekoppelt ist. Durch den Aufbau des Ventilkörpers aus gleichen Ventilkörpereinheiten, wird die Fertigung und eventuelle Reparatur durch Austausch vereinfacht. Die axial sich durch die gesamte Scheibe hindurch erstreckenden Durchführungskanäle ermöglichen auf einfache Weise die strömungsmäßige Verbindung zu darüber oder darunter liegenden Einheiten.

In den Zeichnungen zeigen:
- Figur 1 einen schematischen Aufbau des erfindungsgemäßen Ventils,
- Figur 2 ein Ventil im Ausgangsmodus, wobei das Auslaufsystem um 90° in die Zeichenebene gekippt ist,
- Figur 3 ein Ventil nach Umschaltung (Detailansicht ohne Antrieb), wobei das Auslaufsystem um 90° in die Zeichenebene gekippt ist,
- Figur 4 einen Ventilkörper gemäß einer weiteren Ausführungsform der Erfindung,
- Figur 5 eine Scheibe des Ventilkörpers gemäß Figur 4.

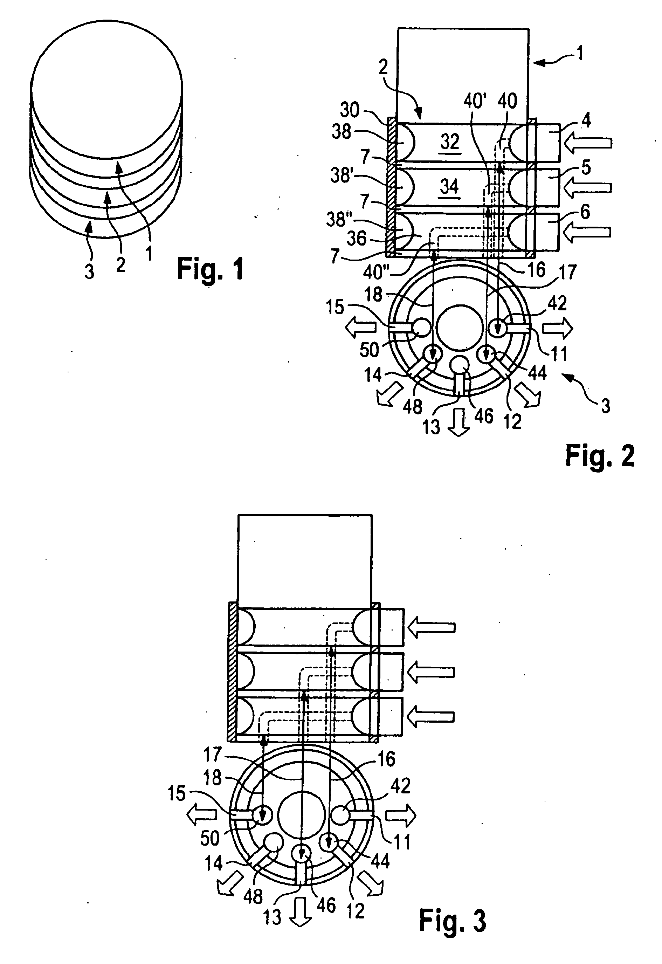

In Figur 1 ist das Mehrkanal-Verteilventil sehr schematisch dargestellt. Es besteht im Wesentlichen aus drei übereinander angeordneten Abschnitten, nämlich einem Antrieb 1, einem Ventilkörper 2, der von einem Mehrkanalzulaufsystem umgeben ist, und einem Mehrkanalverteilsystem 3 unterhalb des Ventilkörpers 2.

Der Antrieb 1 kann ein elektromotorischer oder pneumatischer Drehantrieb sein. Er ist mit dem Ventilkörper 2 verbunden und kann diesen in Drehung versetzen. Der Antrieb wird von einer nicht gezeigten Elektronik angesteuert, optional ist eine Positionsrückmeldeeinheit vorgesehen.

Das Mehrkanalzulaufsystem weist ein Gehäuse 30 auf, in dem der Ventilkörper 2 drehbar gelagert ist. Das Gehäuse 30 hat übereinanderliegende Zuläufe 4 bis 6, die durch das Gehäuse 30 zum Ventilkörper 2 führen.

Der Ventilkörper 2 ist ein ein- oder mehrstückig ausgebildeter Körper. Insbesondere ist der Ventilkörper 2 aus Scheiben 32, 34, 36, die übereinander gestapelt sind und durch Dichtungsebenen 7 voneinander getrennt sind, zusammengesetzt. Die Scheiben 32 bis 36 sind zueinander nicht beweglich. Die Scheiben 32 bis 36 haben am Außenumfang beispielsweise jeweils eine Umfangsnut 38, in die der zugeordnete Zulauf 4 bis 6 mündet. Somit steht ein umfangsmäßig geschlossener Ringraum pro Scheibe zur Verfügung, in dem ein Fluid permanent ansteht. Die Ringräume tragen die Bezugszeichen 38, 38', 38". Von jedem Ringraum 38, 38', 38" geht ein Durchführungskanal 40, 40' bzw. 40" mit einem vertikalen Abschnitt (axiale Durchströmöffnung genannt) zum Mehrkanalauslaufsystem 3.

Dieses Mehrkanalauslaufsystem 3 ist zum Beispiel ebenfalls eine Scheibe, die aber in Figur 2 in die Zeichenebene gekippt dargestellt ist. Das Mehrkanalauslaufsystem weist kurze, axiale Sacklöcher 42 bis 50 auf, die voneinander beabstandet auf einem Durchmesser verteilt sind. Von jedem Loch 42 bis 50 geht ein eigener Verteilerauslauf 11 bis 15 radial nach außen, wobei die Ausläufe 11 bis 15 zu entsprechenden Verbrauchern führen.

Durch die Ringräume 38, 38', 38" steht permanent in den entsprechenden Durchführungskanälen 40 bis 40" ein Fluid an. Dieses Fluid strömt dann zu denjenigen Verteilerausläufen 11 bis 15, die mit den Durchführungskanälen 40 bis 40" gerade fluchten.

In der Stellung nach Figur 2 fluchtet z.B. der Durchführungskanal 40' mit dem Loch 44 und steht damit mit dem Auslauf 12 in Verbindung, wogegen der Durchführungskanal 40" mit dem Loch 48 und damit mit dem Auslauf 14 gekoppelt ist.

Wird nun der Ventilkörper 2 um eine Stellung in Uhrzeigerrichtung gedreht, so kommen die Durchführungskanäle 40 bis 40" mit den angrenzenden Löchern 44, 46 und 50 in Strömungsverbindung.

Für den Ventilkörper 2 werden vorzugsweise Scheiben aus Keramik eingesetzt, um geringe Verschleißanfälligkeit zu garantieren. Anstelle des Scheibenaufbaus können auch Walzen verwendet werden.

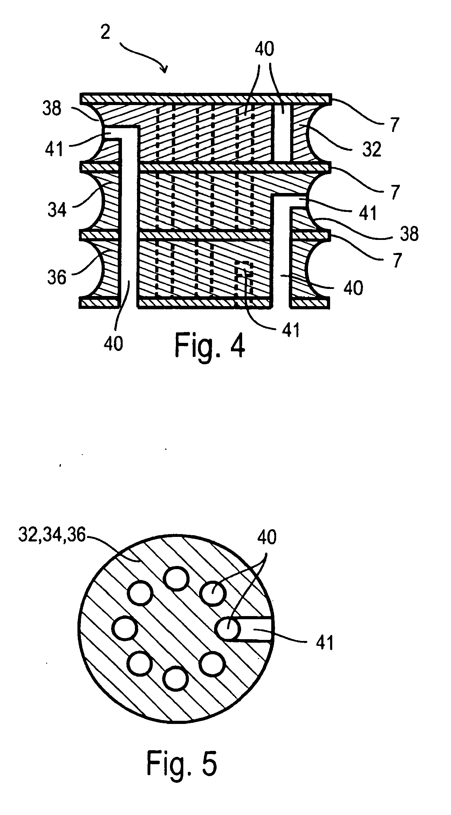

Figur 4 zeigt eine Detailansicht des Ventilkörpers 2 mit Scheiben 32, 34, 36 in einer weiteren Ausführungsform. Die Scheiben 32, 34, 36 sind gleich aufgebaut und in der in Figur 4 gezeigten Ausführungsform jeweils um einen bestimmten Winkel zueinander gedreht. Eine Schnittansicht der Scheiben 32, 34, 36 ist in Figur 5 gezeigt. Der Aufbau und die Funktion des Mehrkanal-Verteilventils ist im Wesentlichen analog zu Figur 2 und 3.

In den Scheiben 32, 34, 36 sind mehrere, z. B. jeweils acht Durchführungskanäle 40 vorgesehen, von denen sich alle, bis auf einen, (sieben) in axialer Richtung durch die gesamte Scheibe 32, 34, 36 hindurch erstrecken. Der achte Durchführungskanal 40 ist mit einem horizontalen Abschnitt 41 mit der Umfangsnut 38 der Scheibe 32, 34, 36 strömungsmäßig verbunden, welche die in Figur 2 und 3 gezeigten Ringräume bildet.

Die Scheiben 32, 34, 36 sind so ausgerichtet, dass die Durchführungskanäle 40 jeweils übereinanderliegen. Die in Figur 4 gezeigte obere Scheibe 32 verbindet einen Zulaufkanal 4 über die Umfangsnut 38 mit dem Durchführungskanal 40, der den horizontalen Abschnitt 41 aufweist. Dieser Durchführungskanal 40 ist mit einem axial verlaufenden Durchführungskanal 40 der Scheibe 34 verbunden. Die Scheiben 34, 36 verbinden ihrerseits jeweils einen Zulaufkanal 5, 6 über ihre Umfangsnut 38 mit dem den horizontalen Abschnitt 41 aufweisenden Durchführungskanal 40. Die vertikal verlaufenden Abschnitte der Durchführungskanäle 40 bilden in der untersten Scheibe 36 axiale Durchströmöffnungen.

Zwischen den Scheiben 32, 34, 36 sind Dichtungsebenen 7 vorgesehen. Um die Durchführungskanäle 40 von übereinanderliegenden Scheiben 32, 34, 36 zu verbinden, sind an den gewünschten Verbindungsstellen Löcher in den Dichtungsebenen 7 vorgesehen, durch die die jeweiligen Durchführungskanäle 40 miteinander verbunden werden.

Vorzugsweise sind die Dichtungsebenen 7 jeweils so ausgebildet, dass nur die Durchführungskanäle 40 durch Löcher in den Dichtungsebenen 7 verbunden werden, welche in einer darüberliegenden Scheibe 32, 34 durch einen horizontalen Abschnitt 41 mit einem Zulaufkanal 4, 5 verbunden sind.

Mit den in Figur 5 gezeigten Scheiben 34 ist es möglich, mit bis zu acht Scheiben 34 bis zu acht verschiedene Durchführungskanäle 40 zu bilden, die jeweils über einen horizontalen Abschnitt 41 in jeweils einer Scheibe 34 mit einem Zulaufkanal 4, 5, 6 verbunden sind.

Insbesondere axial verlaufende Durchführungskanäle 40, die nicht über einen horizontalen Abschnitt 41 mit einem Zulaufkanal 4, 5, 6 verbunden sind, können zur Koppelung der Scheiben 34, beispielsweise durch Einführen von Stäben oder Rohren, benutzt werden.

Wie in Figur 5 gut zu erkennen ist, sind die Durchführungskanäle 40 in der Scheibe 32, 34, 36 mit gleichem radialen Abstand angeordnet und sind in Umfangsrichtung im Wesentlichen gleichmäßig verteilt. Auf diese Weise wird das Trägheitsmoment der Scheibe 32, 34, 36 verringert und eine Unwucht der Scheibe 32, 34, 34 verhindert.

## Patentansprüche

1. Mehrkanal-Verteilventil, mit einem drehbaren Ventilkörper (2), einem Mehrkanalzulaufsystem mit mehreren Zulaufkanälen (4, 5, 6), und einem Mehrkanalauslaufsystem (3) mit mehreren Auslaufkanälen (11 bis 15, 60), wobei der Ventilkörper (2) durch Drehung Zulaufkanäle (4, 5, 6) mit Auslaufkanälen (11 bis 15, 60) strömungsmäßig koppelt,
**dadurch gekennzeichnet, dass**
der Ventilkörper (2) einzelne übereinanderliegende scheibenförmige Einheiten (32, 34, 36) aufweist und an jeder Einheit (32, 34, 36) ein eigener Zulaufkanal (4, 5, 6) mündet.

2. Mehrkanal-Verteilventil nach Anspruch 1, **dadurch gekennzeichnet, dass** jedem Zulaufkanal (4, 5, 6) in den verschiedenen Drehstellungen nur ein Auslaufkanal (11 bis 15, 60) zugeordnet ist.

3. Mehrkanal-Verteilventil nach Anspruch 1 oder 2, **dadurch gekennzeichnet, dass** jedem Zulaufkanal (4, 5, 6) bei Drehen des Ventilkörpers (2) nacheinander jeweils ein singulärer, anderer Auslaufkanal (11 bis 15) zugeordnet ist.

4. Mehrkanal-Verteilventil nach einem der vorhergehenden Ansprüche, **dadurch gekennzeichnet, dass** in dem Ventilkörper (2) Durchführungskanäle (40, 40', 40", 54) vorgesehen sind, wobei jedem Zulaufkanal (4, 5, 6) ein Durchführungskanal (40, 40', 40", 54) zugeordnet ist.

5. Mehrkanal-Verteilventil nach einem der vorhergehenden Ansprüche, **dadurch gekennzeichnet, dass** zugeordnete Zulauf- und Auslaufkanäle (4, 5, 6, 11 bis 15, 54, 60) durch Drehen des Ventilkörpers (2) nacheinander miteinander gekoppelt und voneinander entkoppelt werden.

6. Mehrkanal-Verteilventil nach einem der vorhergehenden Ansprüche, **dadurch gekennzeichnet, dass** der Ventilkörper (2) übereinanderliegende Zulauf- und/oder Auslaufkanäle (4, 5, 6, 11 bis 15, 54, 60) aufweist.

7. Mehrkanal-Verteilventil nach einem der vorhergehenden Ansprüche, **dadurch gekennzeichnet, dass** die Einheiten (32, 34, 36) als Einzelteile vorgefertigte, miteinander gekoppelte Scheiben (32, 34, 36) sind.

8. Mehrkanal-Verteilventil nach einem der vorhergehenden Ansprüche, **dadurch gekennzeichnet, dass** jeder Einheit (32, 34, 36, 52, 56) ein singulärer Zulaufkanal (4, 5, 6) zugeordnet ist.

9. Mehrkanal-Verteilventil nach einem der vorhergehenden Ansprüche **dadurch gekennzeichnet, dass** die Einheiten (32, 34, 36, 52, 56) durch Dichtungen (7) strömungsmäßig voneinander getrennt sind.

10. Mehrkanal-Verteilventil nach einem der vorhergehenden Ansprüche, **dadurch gekennzeichnet, dass** die Einheiten (32, 34, 36, 52, 56) axiale Durchströmöffnungen als Abschnitte der Durchführungskanäle (40, 40', 40", 54) aufweisen.

11. Mehrkanal-Verteilventil nach einem der vorhergehenden Ansprüche, **dadurch gekennzeichnet, dass** alle Durchströmöffnungen in der untersten Einheit (36, 52, 56) enden, an der die Auslaufkanäle (11 bis 15, 60) ansetzen, so dass jeder Durchströmöffnung ein Auslaufkanal (11 bis 15, 60) zugeordnet ist, wobei insbesondere vorgesehen ist, dass die Durchströmöffnungen beim Drehen des Ventilkörpers (2) nacheinander einem anderen Auslaufkanal (11 bis 15, 60) zugeordnet werden.

12. Mehrkanal-Verteilventil nach einem der vorhergehenden Ansprüche, **dadurch gekennzeichnet, dass** jeder Zulaufkanal (4, 5, 6) permanent und in allen Drehstellungen mit seinem singulären, zugeordneten Durchführungskanal (40, 40', 40", 54) gekoppelt ist.

13. Mehrkanal-Verteilventil nach einem der vorhergehenden Ansprüche, **dadurch gekennzeichnet, dass** die Einheiten (32, 34, 36, 52, 56) des Ventilkörpers (2) axiale und radiale Abschnitte der Durchführungskanäle (40, 40', 40", 54) aufweisen.

14. Mehrkanal-Verteilventil nach einem der vorhergehenden Ansprüche, **dadurch gekennzeichnet, dass** sich ein Durchführungskanal (40, 40', 40", 54) über mehrere Einheiten (32, 34, 36, 52, 56) des Ventilkörpers (2) erstreckt.

15. Mehrkanal-Verteilventil nach einem der vorhergehenden Ansprüche, **dadurch gekennzeichnet, dass** die Einheiten (32, 34, 36) alle gleich ausgeführt sind, wobei jede Einheit (32, 34, 36) mindestens einen Durchführungskanal (40) aufweist, der sich axial durch die gesamte Scheibe (32, 34, 36) hindurch erstreckt,
und mindestens einen weiteren, vorzugsweise genau einen weiteren, Durchführungskanal (40) aufweist, der mit einem Zulaufkanal (4, 5, 6) gekoppelt ist.

## Claims

1. A multichannel distribution valve comprising a rotatable valve body (2), a multichannel intake system having a plurality of intake channels (4, 5, 6), and a multichannel discharge system (3) having a plurality of discharge channels (11 to 15, 60), the valve body (2) fluidically coupling intake channels (4, 5, 6) to discharge channels (11 to 15, 60) by rotation,
**characterized in that**
the valve body (2) includes individual disk-shaped units (32, 34, 36) located one above the other, and a separate intake channel (4, 5, 6) opens on each unit (32, 34, 36).

2. The multichannel distribution valve according to claim 1, **characterized in that** each intake channel (4, 5, 6) is assigned only one discharge channel (11 to 15, 60) in the different rotational positions.

3. The multichannel distribution valve according to claim 1 or 2, **characterized in that** when the valve body (2) is rotated, each intake channel (4, 5, 6) is successively assigned one respective singular, different discharge channel (11 to 15, 60).

4. The multichannel distribution valve according to any of the preceding claims, **characterized in that** passage channels (40, 40', 40", 54) are provided in the valve body (2), each intake channel (4, 5, 6) being assigned a passage channel (40, 40', 40", 54).

5. The multichannel distribution valve according to any of the preceding claims, **characterized in that** assigned intake and discharge channels (4, 5, 6, 11 to 15, 60) are successively coupled to each other and uncoupled from each other by rotating the valve body (2).

6. The multichannel distribution valve according to any of the preceding claims, **characterized in that** the valve body (2) includes intake and/or discharge channels (4, 5, 6, 11 to 15, 54, 60) located one above the other.

7. The multichannel distribution valve according to any of the preceding claims, **characterized in that** the units (32, 34, 36) are disks (32, 34, 36) that are prefabricated as individual components and coupled to each other.

8. The multichannel distribution valve according to any of the preceding claims, **characterized in that** each unit (32, 34, 36, 52, 56) is assigned a singular intake channel (4, 5, 6).

9. The multichannel distribution valve according to any of the preceding claims, **characterized in that** the units (32, 34, 36, 52, 56) are fluidically separated from each other by seals (7).

10. The multichannel distribution valve according to any of the preceding claims, **characterized in that** the units (32, 34, 36, 52, 56) have axial flow-through openings as sections of the passage channels (40, 40', 40", 54).

11. The multichannel distribution valve according to any of the preceding claims, **characterized in that** all flow-through openings terminate in the lowermost unit (36, 52, 56) at which the discharge channels (11 to 15, 60) are applied, so that each flow-through opening is assigned a discharge channel (11 to 15, 60), provision being made in particular that when the valve body (2) is rotated, the flow-through openings are successively assigned a different discharge channel (11 to 15, 60).

12. The multichannel distribution valve according to any of the preceding claims, **characterized in that** each intake channel (4, 5, 6) is permanently and in all rotational positions coupled to its singular, assigned passage channel (40, 40', 40", 54).

13. The multichannel distribution valve according to any of the preceding claims, **characterized in that** the units (32, 34, 36, 52, 56) of the valve body (2) have axial and radial sections of the passage channels (40, 40', 40", 54).

14. The multichannel distribution valve according to any of the preceding claims, **characterized in that** a passage channel (40, 40', 40", 54) extends over a plurality of units (32, 34, 36, 52, 56) of the valve body (2).

15. The multichannel distribution valve according to any of the preceding claims, **characterized in that** the units (32, 34, 36) are all of the same construction, each unit (32, 34, 36) including at least one passage channel (40) which extends axially through the entire disk (32, 34, 36), and at least one further, preferably exactly one further, passage channel (40) which is coupled to an intake channel (4, 5, 6).

## Revendications

1. Valve de distribution à canaux multiples, comportant un corps de valve (2) rotatif, un système d'amenée à canaux multiples qui présente plusieurs canaux d'amenée (4, 5, 6), et un système d'évacuation (3) à canaux multiples qui présente plusieurs canaux d'évacuation (11 à 15, 60), le corps de valve (2) reliant par rotation du point de vue écoulement des canaux d'amenée (4, 5, 6) à des canaux d'évacuation (11 à 15, 60),
**caractérisée en ce que**
le corps de valve (2) présente des unités (32, 34, 36) individuelles en forme de disques agencées les unes sur les autres, et **en ce que** sur chaque unité (32, 34, 36) débouche un canal d'amenée (4, 5, 6) associé.

2. Valve de distribution à canaux multiples selon la revendication 1, **caractérisée en ce qu'**un seul canal d'évacuation (11 à 15, 60) est associé à chaque canal d'amenée (4, 5, 6) dans les différentes positions de rotation.

3. Valve de distribution à canaux multiples selon la revendication 1 ou 2, **caractérisée en ce qu'**un canal d'évacuation (11 à 15) singulier différent est respectivement associé l'un après l'autre à chaque canal d'amenée (4, 5, 6) lors de la rotation du corps de valve (2).

4. Valve de distribution à canaux multiples selon l'une des revendications précédentes, **caractérisée en ce que** des canaux de traversée (40, 40', 40", 54) sont prévus dans le corps de valve (2), un canal de traversée (40, 40', 40", 54) étant associé à chaque canal d'amenée (4, 5, 6).

5. Valve de distribution à canaux multiples selon l'une des revendications précédentes, **caractérisée en ce que** des canaux d'amenée et d'évacuation associés (4, 5, 6, 11 à 15, 54, 60) sont successivement couplés les uns aux autres et découplés les uns des autres par rotation du corps de valve (2).

6. Valve de distribution à canaux multiples selon l'une des revendications précédentes, **caractérisée en ce que** le corps de valve (2) présente des canaux d'amenée et/ou des canaux d'évacuation (4, 5, 6, 11 à 15, 54, 60) agencés les uns sur les autres.

7. Valve de distribution à canaux multiples selon l'une des revendications précédentes, **caractérisée en ce que** les unités (32, 34, 36) sont des disques (32, 34, 36) couplés les uns aux autres qui sont préfabriqués sous forme de pièces détachées.

8. Valve de distribution à canaux multiples selon l'une des revendications précédentes, **caractérisée en ce qu'**un canal d'amenée singulier (4, 5, 6) est associé à chaque unité (32, 34, 36, 52, 56).

9. Valve de distribution à canaux multiples selon l'une des revendications précédentes, **caractérisée en ce que** les unités (32, 34, 36, 52, 56) sont séparées les unes des autres du point de vue écoulement au moyen de joints d'étanchéité (7).

10. Valve de distribution à canaux multiples selon l'une des revendications précédentes, **caractérisée en ce que** les unités (32, 34, 36, 52, 56) présentent des orifices d'écoulement axiaux sous forme de tronçons des canaux de traversée (40, 40', 40", 54).

11. Valve de distribution à canaux multiples selon l'une des revendications précédentes, **caractérisée en ce que** tous les orifices d'écoulement débouchent dans l'unité inférieure (36, 52, 56) à laquelle se raccordent les canaux de d'évacuation (11 à 15, 60), de telle sorte qu'un canal d'évacuation (11 à 15, 60) est associé à chaque orifice d'écoulement, une association successive des orifices d'écoulement à un canal d'évacuation (11 à 15, 60) différent lors de la rotation du corps de valve (2) étant en particulier prévue.

12. Valve de distribution à canaux multiples selon l'une des revendications précédentes, **caractérisée en ce que** chaque canal d'amenée (4, 5, 6) est couplé en permanence et dans toutes les positions de rotation à son canal de traversée (40, 40', 40", 54) associé singulier.

13. Valve de distribution à canaux multiples selon l'une des revendications précédentes, **caractérisée en ce que** les unités (32, 34, 36, 52, 56) du corps de valve (2) présentent des tronçons axiaux et radiaux des canaux de traversée (40, 40', 40", 54).

14. Valve de distribution à canaux multiples selon l'une des revendications précédentes, **caractérisée en ce qu'**un canal de traversée (40, 40', 40", 54) s'étend sur plusieurs unités (32, 34, 36, 52, 56) du corps de valve (2).

15. Valve de distribution à canaux multiples selon l'une des revendications précédentes, **caractérisée en ce que** les unités (32, 34, 36) sont toutes réalisées de manière identique, chaque unité (32, 34, 36) présentant au moins un canal de traversée (40) qui s'étend axialement à travers tout le disque (32, 34, 36), et au moins un canal de traversée complémentaire, de préférence exactement un canal de traversée (40) complémentaire qui est relié à un canal d'amenée (4, 5, 6).
